# FASCICULE DE BREVET EUROPEEN

(11) **EP 2 256 039 B1**
(45) Date de publication et mention de la délivrance du brevet: **16.09.2020**
(21) Numéro de dépôt: 10162158.9
(22) Date de dépôt: 06.05.2010
(51) Int. Cl.: B64G 1/22, B64G 1/66, F16C 11/12

(54) **Pivot traversant à éléments flexibles et engin spatial comportant un tel pivot**
Durchgehender Zapfen mit flexiblen Elementen, und mit einem solchen Zapfen ausgestattetes Raumschiff
Through-pivot with flexible elements and spacecraft comprising such a pivot

(30) Priorité: 19.05.2009 FR 0902427
(43) Date de publication de la demande: 01.12.2010
(73) Titulaire: THALES, 92400 Courbevoie (FR)
(72) Inventeur: Baudasse, Yannick, 06130, Grasse (FR)
(74) Mandataire: Esselin, Sophie

(56) Documents cités:
- EP-A1- 0 974 761
- FR-A1- 2 913 078
- US-A- 2 907 563
- US-A1- 2003 235 460

## Description

La présente invention se rapporte à un pivot traversant, c'est-à-dire un dispositif apte à supporter un arbre rotatif qui s'étend des deux côtés du pivot ou entre deux pivots et à un engin spatial comportant au moins un tel pivot. L'invention s'applique au domaine des engins spatiaux tels que des satellites pour le guidage fin en rotation d'au moins un élément ou un équipement de l'engin spatial dans une direction de pointage prédéterminée.

Dans les applications spatiales, il est nécessaire de pouvoir orienter certains éléments, tels que par exemple une antenne, un mât ou un équipement, d'un satellite ou d'un véhicule spatial, dans une direction prédéterminée afin, par exemple, de les diriger vers une cible externe telle qu'une planète, un récepteur, ou un émetteur, de conserver un pointage vers un point à la surface de la terre ou bien encore de balayer une zone particulière à la surface de la terre ou d'un astre quelconque. Ces positionnements doivent être fréquemment corrigés pour compenser d'inévitables dérives dans la tenue de cette direction et ces multiples corrections entraînent la réalisation d'un nombre important de cycles de micro-rotation pour ces appendices spatiaux et pour leurs dispositifs de support. Cette phase est appelée pointage fin.

Compte tenu du caractère irréversible de la mise en orbite d'un satellite, il est nécessaire de prévoir lors de la conception de l'engin spatial, une durée de vie, mesurée en nombre de cycles, très importante pour ces dispositifs de support, de façon à garantir leur capacité à résister à ces très nombreuses sollicitations. Par exemple la durée de vie peut être supérieure à 300000 cycles. D'autres exigences des dispositifs de support sont une forte capacité de tenue mécanique notamment vis-à-vis des efforts extérieurs et des moments de flexion exercés sur l'arbre supporté, une forte rigidité transverse, un guidage sans jeu de grande précision, une amplitude de rotation importante pour des éléments flexibles, typiquement de l'ordre de 5 à 10°, dans les deux sens positif et négatif, et un couple résistant faible et constant.

Il est connu de réaliser un dispositif de support pour un arbre rotatif avec un pivot à lames flexibles croisées, notamment ceux connus sous l'appellation « Pivot Bendix ». Ce type de pivot n'est pas traversant. Il est donc nécessaire de monter l'arbre supporté en porte-à-faux, ce qui implique des contraintes importantes dans les lames du pivot et une transmission de contraintes importantes au bâti support, même dans le cas d'un montage à double pivot. Ce type de pivot offre donc une tenue mécanique et une rigidité transverse limitée, et ne répond pas de manière satisfaisante à toutes les exigences pour la réalisation d'un dispositif de pointage fin.

Il est également connu de supporter un arbre avec un dispositif comprenant deux pivots constitués de roulements à billes. Un tel dispositif est sujet à une usure importante en présence de mouvements alternatifs ou oscillatoires et présente donc une durée de vie limitée. Il ne répond donc pas non plus de manière satisfaisante à toutes les exigences pour la réalisation d'un dispositif de pointage fin destiné à une application spatiale.

La demande de brevet FR 2 703 415 décrit un dispositif de support d'un arbre rotatif comportant un pivot traversant à lames qui convient à la réalisation d'un dispositif de pointage fin, notamment pour une application spatiale, cependant la capacité angulaire du pivot est limitée à de faibles angles de rotation et ne convient pas dès qu'il s'agit de réaliser des corrections angulaires plus importantes.

Le document EP 0 974 761 qui décrit toutes les caractéristiques techniques du préambule de la revendication 1 est considéré comme le document de l'art antérieur le plus proche.

L'invention a pour objet de résoudre ces problèmes et de proposer un pivot traversant à éléments flexibles ayant une forte capacité de tenue mécanique aux efforts extérieurs et aux moments de flexion, une forte rigidité transverse, permettant un guidage sans jeu et de grande précision, un faible couple résistant, une durée de vie supportant un grand nombre d'oscillations en rotation au moins supérieur à 300000, et ayant une capacité angulaire au moins doublée par rapport au pivot décrit dans la demande de brevet FR 2 703 415.

Pour cela, l'invention concerne un pivot traversant comprenant une première bague et une deuxième bague, les deux bagues ayant une symétrie de révolution autour d'un même axe longitudinal, l'une des deux bagues étant mobile en rotation autour de l'axe longitudinal par rapport à l'autre bague, comportant au moins un cadre flottant mobile autour de l'axe longitudinal, et les deux bagues étant reliées au cadre flottant par au moins un premier jeu, respectivement au moins un deuxième jeu, de plusieurs éléments flexibles s'étendant selon une direction transversale par rapport aux deux bagues, les éléments flexibles du premier jeu comportant une première extrémité reliée au cadre flottant et une deuxième extrémité opposée à la première extrémité reliée à la première bague et les éléments flexibles du deuxième jeu comportant une première extrémité reliée au cadre flottant et une deuxième extrémité opposée à la première extrémité reliée à la deuxième bague. Selon l'invention, dans un état de repos, les éléments flexibles reliés à la première bague sont inclinés d'un même angle d'inclinaisoar rapport à des directions radiales de la première bague et en ce que les éléments flexibles reliés à la deuxième bague sont inclinés d'un même angle d'inclinaison mais selon un sens opposé par rapport au sens d'inclinaison des éléments flexibles.

Le cadre flottant peut être placé indifféremment à l'extérieur des deux bagues ou à l'intérieur des deux bagues.

Le cadre flottant peut être monobloc et comporter une symétrie de révolution autour de l'axe longitudinal ou être constitué par plusieurs portions de bague, auxquelles sont fixées les premières extrémités des éléments flexibles.

Les éléments flexibles sont préférentiellement des lames flexibles.

Avantageusement, au moins l'une des deux bagues présente un orifice traversant, centré sur l'axe longitudinal, apte à recevoir un arbre traversant passant par ledit orifice central.

Dans un mode de réalisation de l'invention, la première bague comporte au moins un cylindre auquel sont fixées les deuxièmes extrémités des éléments flexibles et la deuxième bague comporte au moins un cylindre auquel sont fixées les deuxièmes extrémités des éléments flexibles, les cylindres ayant le même diamètre extérieur et étant empilés selon l'axe longitudinal.

L'invention concerne également un engin spatial comportant au moins un pivot traversant.

L'invention sera mieux comprise, et d'autres buts, détails, caractéristiques et avantages de celle-ci apparaîtront plus clairement au cours de la description suivante de plusieurs modes de réalisation particuliers, donnés uniquement à titre illustratif et non limitatif, en référence aux dessins annexés qui représentent :
- figure 1 : une représentation schématique en coupe transversale d'un exemple de pivot à deux étages avec un cadre flottant extérieur et des lames radiales, dans une position de repos centrée, selon un premier mode de réalisation de l'invention ;
- figure 2 : une représentation schématique en coupe transversale d'un exemple de pivot à deux étages dans une position de rotation positive, selon le premier mode de réalisation de l'invention ;
- figure 3 : une représentation schématique en coupe transversale d'un exemple de pivot à deux étages dans une position de rotation négative, selon le premier mode de réalisation de l'invention ;
- figure 4 : une représentation schématique en coupe transversale d'un exemple de pivot à deux étages avec un cadre flottant intérieur, selon un deuxième mode de réalisation de l'invention ;
- figures 5a, 5b : deux représentations schématiques, respectivement en coupe transversale et en vue de côté, d'un exemple de pivot à deux étages avec des bagues fixe et mobile superposées, selon un troisième mode de réalisation de l'invention ;
- figures 6a, 6b : une représentation schématique en coupe transversale d'un exemple de pivot à deux étages avec un cadre flottant intérieur et des lames inclinées dans un même sens, selon un quatrième mode de réalisation de l'invention, et un exemple de graphe représentant la relation entre le couple appliqué et l'angle de rotation obtenue avec ce type de pivot, pour différents angles d'inclinaison ;
- figures 7a, 7b : une représentation schématique en coupe transversale d'un exemple de pivot à deux étages avec un cadre flottant intérieur et des lames inclinées dans deux sens opposés, selon un cinquième mode de réalisation de l'invention, et un exemple de graphe représentant la relation entre le couple appliqué et l'angle de rotation obtenue avec ce type de pivot, pour différents angles d'inclinaison
- figures 8 et 9 : deux vues en perspective de deux exemples de pivot à deux étages selon le quatrième, respectivement le cinquième, mode de réalisation de l'invention ;
- figures 10a et 10b : deux vues en perspective et de face d'un exemple de pivot ayant un nombre d'étages supérieur à deux, selon l'invention.

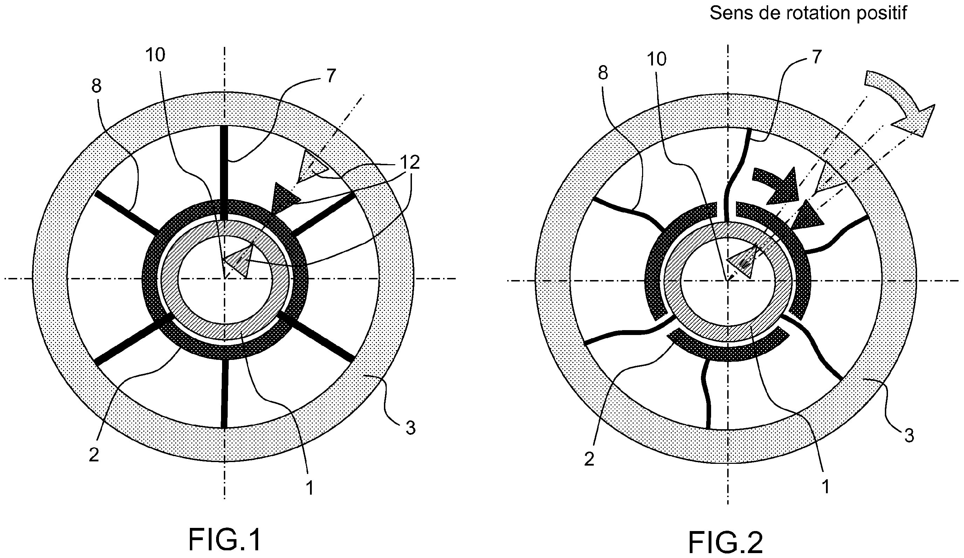

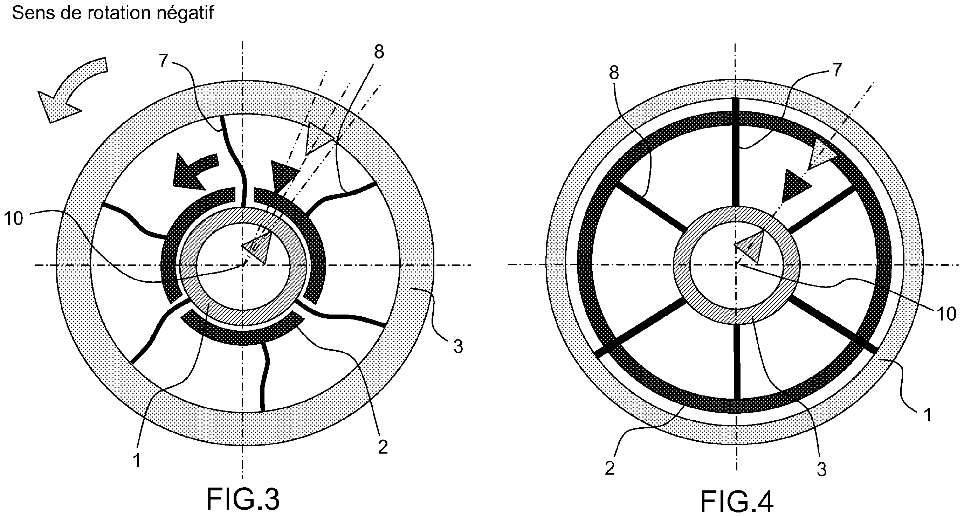

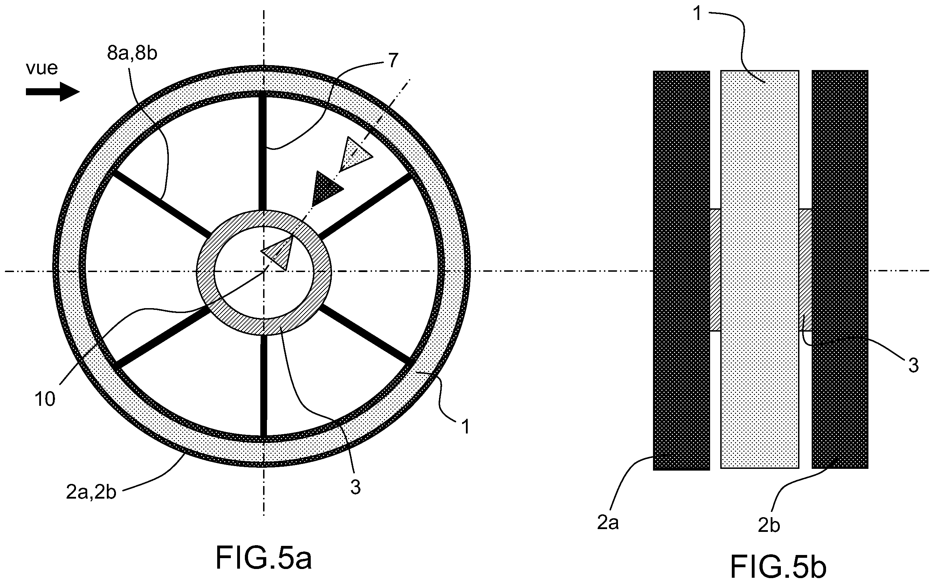

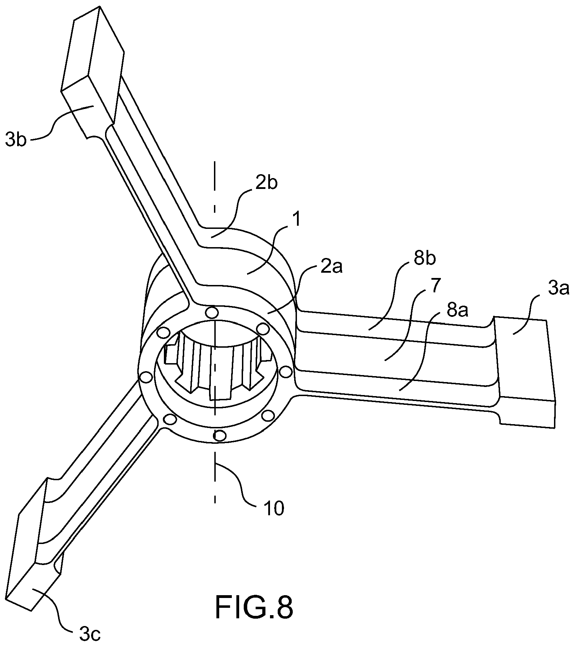

Le pivot représenté schématiquement en coupe transversale sur la figure 1 comprend une première bague 1 et une deuxième bague 2, les deux bagues présentant une forme cylindrique de révolution, d'axe longitudinal 10. L'une des bagues, par exemple la bague 2, est mobile en rotation autour de l'axe 10 et constitue un rotor, l'autre bague, par exemple la bague 1, est fixe et constitue un stator. Alternativement, le rôle des bagues 1 et 2 peut être inversé. Le rotor, par exemple la bague 2, est destiné à être relié à un actuateur non représenté, le stator, par exemple la bague 1, est fixé à une structure fixe non représentée. Au moins le rotor présente un orifice traversant centré sur l'axe longitudinal 10 permettant de recevoir un arbre traversant passant par ledit orifice central. Chacune des bagues 1 et 2 est reliée à un cadre flottant 3 par des éléments flexibles respectifs 7, 8, tel que par exemple des lames flexibles, le cadre flottant pouvant être placé à l'extérieur des deux bagues 1 et 2 comme représenté sur les figures 1 à 3 et 6 à 9, ou à l'intérieur des deux bagues 1 et 2 comme représenté sur les figures 4 et 5. Le cadre flottant peut comporter par exemple, une troisième bague de forme cylindrique de révolution autour de l'axe 10 comme représenté sur la figure 1, ou être constitué de plusieurs éléments séparés indépendants 3a, 3b, 3c, formant des portions de bague réparties régulièrement sur une circonférence autour du rotor et du stator et reliés aux extrémités supérieures des éléments flexibles 7, 8, comme représenté sur les figures 8, 9, 10. Alternativement, le cadre flottant pourrait être localisé à l'intérieur du rotor et du stator comme représenté sur la figure 5a. Chaque élément flexible 7, 8 peut être constitué par exemple par une, ou plusieurs, lame de type plaque rectangulaire plane comportant une extrémité inférieure fixée sur la première, ou respectivement sur la deuxième bague, et une extrémité supérieure fixée sur le cadre flottant 3. Chaque lame flexible 7, 8 s'étend selon une direction transversale et vers l'extérieur par rapport aux bagues fixe et mobile 1, 2. Le cadre flottant 3 n'est relié à aucun actuateur, ni à aucune structure fixe, et est donc libre de se mouvoir en rotation selon le mouvement des lames flexibles 7, 8.

Dans les exemples de réalisation représentés schématiquement sur les différentes figures, la bague fixe 1 est reliée à la bague flottante 3, par un premier jeu de trois lames flexibles 7 espacées angulairement, par exemple de 120°, et la bague mobile 2 est reliée à la bague flottante 3 par un deuxième jeu de trois lames flexibles 8 espacées angulairement, par exemple de 120°. Bien entendu, le nombre de lames flexibles de chaque jeu de lames n'est pas limité à trois et l'espacement entre les lames d'un même jeu peut être différent de 120°.

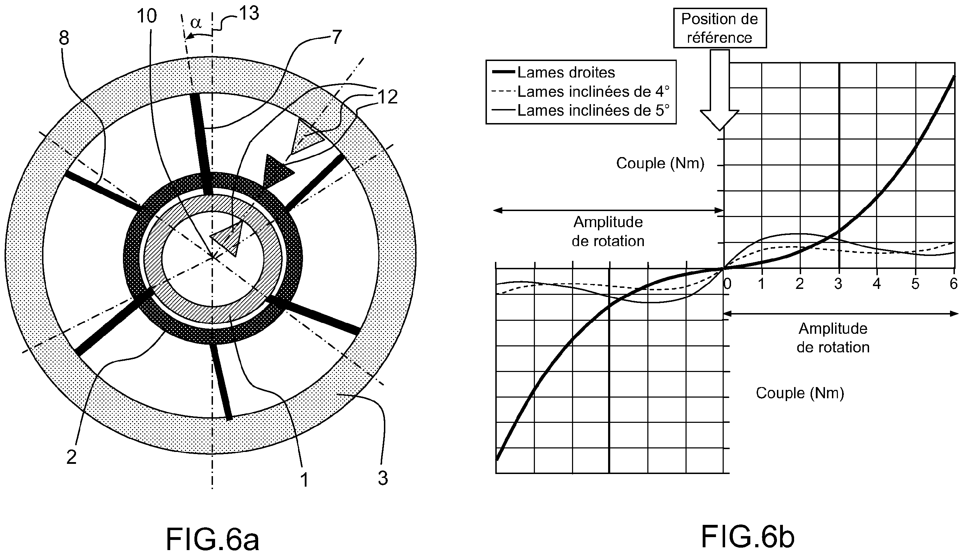

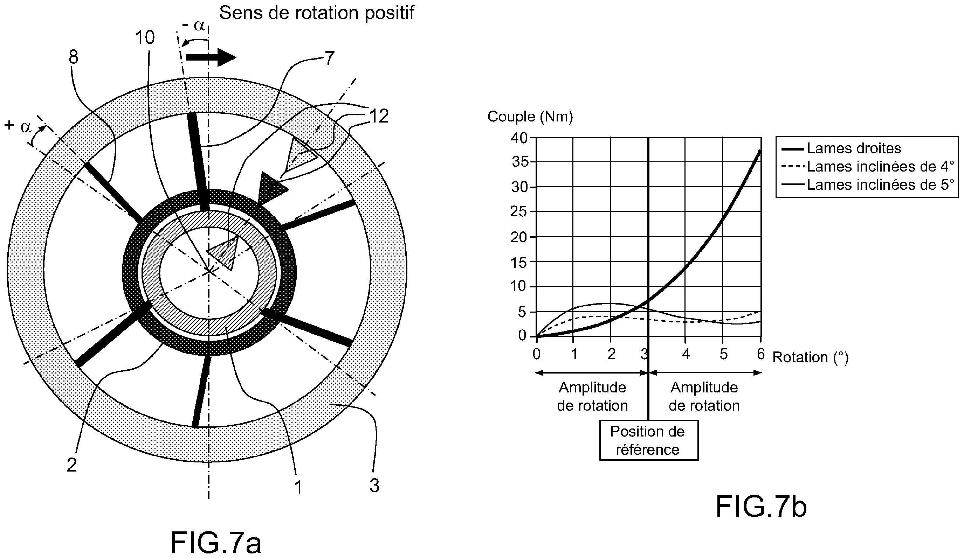

Dans une position de repos repérée par les trois flèches 12, c'est-à-dire quand aucun couple ne sollicite les bagues en rotation, chaque lame flexible 7, 8 peut être disposée selon une direction transversale confondue avec une direction radiale des bagues et passant par l'axe longitudinal 10 comme représenté sur les figures 1, 4 et 5a ou selon une direction transversale formant un angle d'inclinaison α non nul par rapport à une direction radiale des bagues comme représenté sur les figures 6a et 7a. Lorsque l'angle d'inclinaison α est non nul, les lames ne convergent pas sur l'axe 10 situé au centre du pivot ce qui permet de faire travailler les lames essentiellement en flexion et d'obtenir une capacité de déplacement angulaire plus importante par rapport à des lames radiales qui à angle de rotation identique vont passer à un mode de fonctionnement en traction et compression. Par exemple, l'angle d'inclinaison α peut être compris entre 2° et 10° et préférentiellement entre 4° et 5°.

Les figures 2 et 3 montrent la déformation des lames flexibles 7, 8 lors d'un déplacement de la roue mobile 2 en rotation autour de l'axe longitudinal 10 dans un sens positif correspondant au sens des aiguilles d'une montre ou respectivement dans un sens négatif correspondant au sens inverse des aiguilles d'une montre. Si la bague mobile constituant le rotor est la bague 2 et la bague fixe constituant le stator liée à un support fixe est la bague 1, à partir de la position de repos, un mouvement en rotation de la bague mobile 2 dans le sens positif, correspondant au sens des aiguilles d'une montre, provoque une rotation dans le sens positif du cadre flottant 3 par l'intermédiaire des lames flexibles 8 du deuxième jeu de lames et un fléchissement des lames flexibles 7 du premier jeu de lames par l'intermédiaire du cadre flottant 3. Le fonctionnement est similaire mais le travail des lames flexibles est inversé si la rotation de la bague mobile 2 est dans le sens négatif.

Le fonctionnement est également similaire si le cadre flottant 3 est aménagé à l'intérieur des deux bagues 1, 2 comme représenté par exemple sur le deuxième mode de réalisation de la figure 4.

Le troisième mode de réalisation des figures 5a et 5b correspond au cas où la bague mobile 2 et la bague fixe 1 sont de même diamètre extérieur et disposées selon des plans différents superposés et parallèles entre eux. La bague mobile 2 comporte deux parties annulaires 2a, 2b distinctes, identiques et disposées symétriquement de part et d'autre de la bague fixe 1. Dans ce cas il est nécessaire de doubler certains éléments flexibles 8a, 8b pour relier chacune des deux parties 2a, 2b de la bague mobile 2 au cadre flottant 3 qui, dans ce mode de réalisation, est placé à l'intérieur des deux bagues 1, 2.

Dans un quatrième mode de réalisation de l'invention et dans une position de repos centrée, repérée sur la figure 6a par les trois flèches 12, les lames flexibles 7, 8 du premier et du deuxième jeu de lames sont inclinées d'un angle α dans un même sens, par exemple dans un sens inverse au sens des aiguilles d'une montre appelé sens négatif, par rapport à des directions radiales 13 des bagues, représentées en pointillées sur la figure 6a. Dans ce cas, si la bague mobile constituant le rotor est la bague 2 et la bague fixe constituant le stator lié à un support fixe est la bague 1, à partir de la position de repos, un mouvement en rotation de la bague externe mobile 2 dans le sens positif, correspondant au sens des aiguilles d'une montre, provoque une rotation dans le sens positif de la troisième bague 3 et un fléchissement des lames flexibles 7 du premier jeu, alors que les lames flexibles 8 du deuxième jeu ne fléchissent pas du fait de leur sens d'inclinaison.

Par ailleurs, à partir de la position de repos, un mouvement en rotation de la bague mobile 2 dans le sens négatif, provoque un fléchissement des lames flexibles 8 du deuxième jeu de lames.

Dans un cinquième mode de réalisation de l'invention et dans une position de repos excentrée, repérée sur la figure 7a par les trois flèches 12, les lames flexibles 7, 8 du premier et du deuxième jeu de lames sont inclinées d'un angle α mais selon deux sens opposés. Par exemple les lames flexibles 7 du premier jeu sont inclinées dans le sens négatif, angle -α, par rapport à des directions radiales des bagues 1, 2 alors que les lames flexibles 8 du deuxième jeu sont inclinées dans le sens positif, angle +α. Dans ce mode de réalisation le pivot fonctionne dans un sens de rotation unique correspondant au sens positif comme représenté sur la figure 7. A partir de la position de repos, un mouvement en rotation de la bague mobile 2 dans le sens positif entraîne les lames flexibles 8 du deuxième jeu de lames en rotation ce qui provoque une rotation dans le sens positif de la troisième bague 3 et un fléchissement des lames flexibles 7 du premier jeu.

Dans les différents modes de réalisation du pivot selon l'invention, la bague fixe 1 n'est pas liée directement à la bague mobile 2, comme dans les pivots de l'art antérieur, mais les deux bagues fixe et mobile sont liées par l'intermédiaire du cadre flottant 3 et d'un jeu de lames additionnel qui constitue un deuxième étage du pivot, les deux jeux de lames 7, 8 fonctionnant en série. Cette structure permet en utilisant des lames flexibles équivalentes de même raideur, d'obtenir une capacité angulaire doublée par rapport à une structure de pivot à un seul étage.

Les exemples de graphes représentés sur les figures 6b et 7b montrent, pour différents angles d'inclinaison, l'amplitude de rotation obtenue en fonction du couple appliqué à la bague mobile pour un pivot réalisé selon le quatrième mode de réalisation de l'invention correspondant à la figure 6a et, respectivement le cinquième mode de réalisation de l'invention correspondant à la figure 7a. Sur le graphe de la figure 6b, le pivot oscille autour d'une position de référence correspondant à la position au repos avec une amplitude angulaire allant jusqu'à 6°. Sur le graphe de la figure 7b, le pivot oscille autour d'une position de référence choisie par exemple égale à 3°. Cependant ces valeurs sont données purement à titre d'exemple non limitatif et il est possible de réaliser des pivots avec des capacités angulaires supérieures. La capacité angulaire dépend du matériau, de la longueur et de la section des lames flexibles utilisées. Plus les lames sont fines et longues, plus elles sont souples et ont une grande capacité angulaire mais elles supportent moins bien des charges. Le choix des dimensions et du matériau des lames dépend donc de l'application souhaitée et de la capacité angulaire souhaitée.

La vue en perspective de la figure 8 représente un exemple de réalisation d'un pivot, dans une position de repos centrée, selon le troisième mode de réalisation de l'invention dans lequel le cadre flottant 3 est constitué de trois éléments séparés 3a, 3b, 3c formant des portions de bague réparties régulièrement sur une circonférence autour du rotor et du stator auxquelles sont fixées les extrémités supérieures de toutes les lames flexibles 7, 8. Les deux bagues fixe 1 et mobile 2 sont constituées de cylindres creux de révolution, de même axe longitudinal 10, et de même diamètre extérieur, empilés selon l'axe longitudinal 10. Le cylindre central 1 peut être relié par exemple à un actuateur et les deux cylindres 2a, 2b disposés symétriquement de part et d'autre du cylindre central 1, peuvent être liés entre eux par l'intermédiaire d'un bâti fixe non représenté. Toutes les lames 7, 8 des deux jeux de lames flexibles sont situées sur un même niveau, sont de même longueur et inclinées d'un même angle par rapport à une direction radiale et selon un même sens d'inclinaison. Chaque lame 7 comporte une extrémité inférieure fixée sur le cylindre central 1 et une extrémité supérieure reliée à un élément 3a, 3b, 3c du cadre flottant. Chaque lame 8 est constituée de deux demi-lames 8a, 8b, comportant chacune une extrémité inférieure fixée respectivement sur l'un des cylindres 2a, 2b et une extrémité supérieure reliée à un même élément 3a, 3b, 3c du cadre flottant. Les deux demi-lames 8a, 8b de chaque lame 8 du deuxième jeu de lames flexibles sont disposées de part et d'autre d'une lame 7 du premier jeu de lames flexibles. Le cylindre central 1 peut comporter une surface intérieure dentelée pouvant par exemple recevoir un arbre fixé solidement à cette surface. Le fait de séparer la bague mobile 2 en deux cylindres 2a, 2b disposés symétriquement de part et d'autre d'un cylindre central 1 permet de mieux répartir les efforts qui s'exercent sur le pivot et d'en améliorer ainsi la durée de vie. Alternativement, il est possible d'inverser le rôle du cylindre central 1 qui peut être fixe et des deux cylindres externes 2a, 2b qui peuvent être mobiles, l'essentiel étant l'existence d'un mouvement relatif entre les deux bagues interne 1 et externe 2 du pivot.

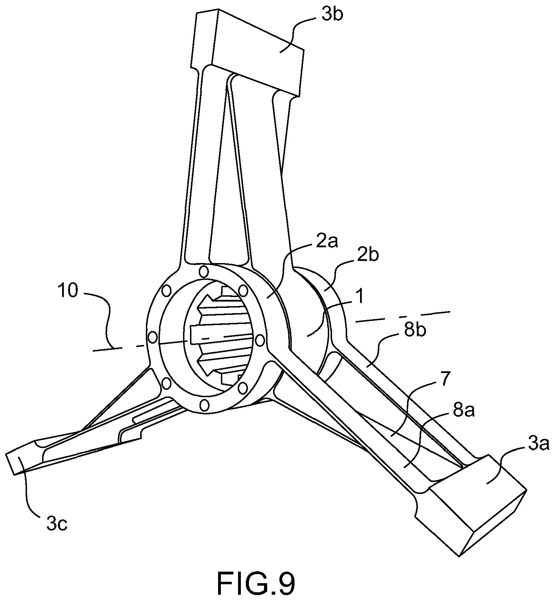

La vue en perspective de la figure 9 représente un exemple de réalisation d'un pivot, dans une position de repos excentrée, selon le deuxième mode de réalisation de l'invention dans lequel le cadre flottant 3 est constitué de trois éléments séparés 3a, 3b, 3c auxquels sont fixées les extrémités supérieures de toutes les lames flexibles 7, 8. Dans cet exemple de réalisation de l'invention, la différence par rapport à la figure 8 réside dans le sens d'inclinaison des lames au repos. Les deux demi-lames 8a, 8b de chaque lame 8 sont inclinées d'un même angle par rapport à une direction radiale et selon un même sens d'inclinaison alors que les lames 7 sont inclinées d'un même angle par rapport à une direction radiale mais selon un sens opposé à celui des lames 8.

Tous les exemples de réalisation précédents concernent des pivots à deux étages de lames flexibles qui permettent, à dimensions de lames équivalentes, de doubler la capacité angulaire du pivot ne comportant qu'un seul étage de lames. Cependant, pour obtenir une capacité angulaire encore augmentée, il est possible de réaliser de la même façon des pivots avec un nombre d'étages supérieur à deux.

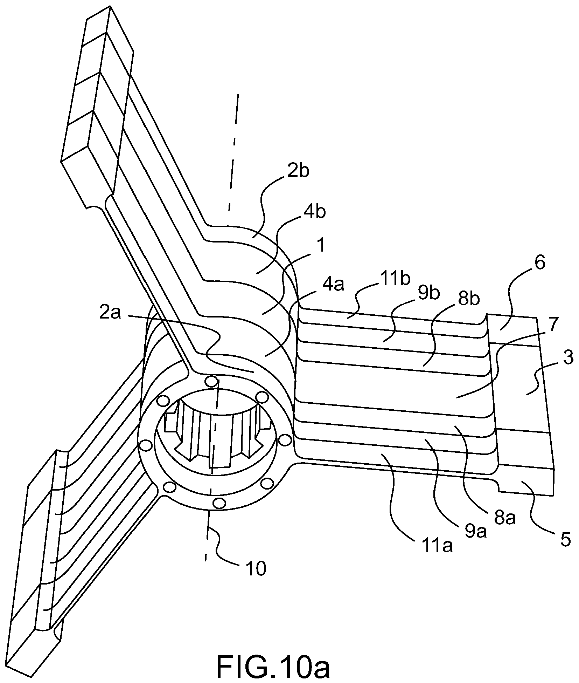

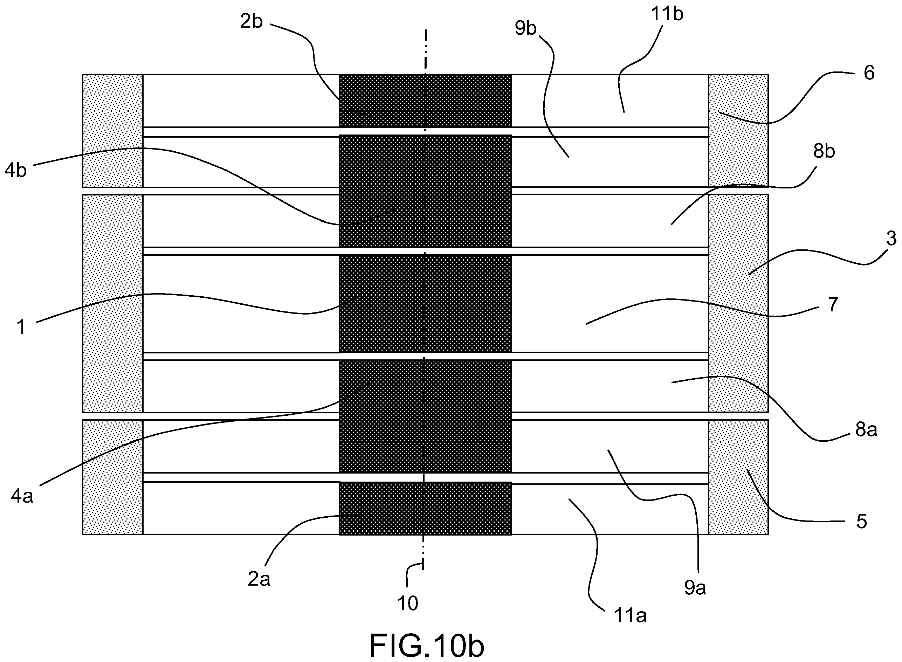

Les vues en perspective et de face des figures 10a et 10b représentent un exemple de pivot traversant à lames multi-étages comportant quatre étages de sept jeux 7, 8a, 8b, 9a, 9b, 11a, 11b de trois lames flexibles réparties angulairement sur une bague interne comportant un cylindre interne 1, une bague externe comportant deux cylindres extérieurs 2a, 2b situés symétriquement de part et d'autre de la bague interne et cinq cadres flottants internes 4a, 4b et externes 3, 5, 6, les lames flexibles étant respectivement fixées aux différents cadres flottants et aux différents cylindres. Les trois cadres flottants 3, 5, 6 sont constitués de trois éléments séparés mais pourraient alternativement être constitués de bagues annulaires. Le quatrième étage est constitué de 4 jeux de lames flexibles 9a, 9b et 11a, 11b externes fixées aux deux cylindres extérieurs 2a, 2b de la bague externe, lesdits cylindres extérieurs pouvant être reliés entre eux par exemple par l'intermédiaire d'un bâti fixe non représenté.

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Notamment le nombre de lames flexibles de chaque jeu peut être différent de trois.

## Revendications

1. Pivot traversant comprenant une première bague (1) et une deuxième bague (2), les deux bagues ayant une symétrie de révolution autour d'un même axe longitudinal (10), l'une des deux bagues étant mobile en rotation autour de l'axe longitudinal (10) par rapport à l'autre bague, ledit pivot traversant comportant au moins un cadre flottant (3) mobile autour de l'axe longitudinal (10), les deux bagues (1, 2) étant reliées au cadre flottant (3) par au moins un premier jeu, respectivement au moins un deuxième jeu, de plusieurs éléments flexibles (7, 8) s'étendant selon une direction transversale par rapport aux deux bagues (1, 2), les éléments flexibles (7) du premier jeu comportant une première extrémité reliée au cadre flottant (3) et une deuxième extrémité opposée à la première extrémité reliée à la première bague (1) et les éléments flexibles (8) du deuxième jeu comportant une première extrémité reliée au cadre flottant (3) et une deuxième extrémité opposée à la première extrémité reliée à la deuxième bague (2), **caractérisé en ce que**, dans un état de repos, les éléments flexibles (7) reliés à la première bague (1) sont inclinés d'un même angle d'inclinaison (α) par rapport à des directions radiales de la première bague (1) et **en ce que** les éléments flexibles (8) reliés à la deuxième bague (2) sont inclinés d'un même angle d'inclinaison (α) mais selon un sens opposé par rapport au sens d'inclinaison des éléments flexibles (7).

2. Pivot traversant selon la revendication 1, **caractérisé en ce que** le cadre flottant (3) est placé à l'extérieur des deux bagues (1, 2).

3. Pivot traversant selon la revendication 1, **caractérisé en ce que** le cadre flottant (3) est placé à l'intérieur des deux bagues (1, 2).

4. Pivot traversant selon l'une des revendications précédentes, **caractérisé en ce que** le cadre flottant (3) est monobloc et comporte une symétrie de révolution autour de l'axe longitudinal (10).

5. Pivot traversant selon l'une des revendications 1 à 3, **caractérisé en ce que** le cadre flottant (3) est constitué par plusieurs portions de bague (3a, 3b, 3c), auxquelles sont fixées les premières extrémités des éléments flexibles (7, 8).

6. Pivot traversant selon l'une des revendications précédentes, **caractérisé en ce que** les éléments flexibles (7, 8) sont des lames flexibles.

7. Pivot traversant selon l'une des revendications précédentes, **caractérisé en ce que** au moins l'une des deux bagues (1, 2) présente un orifice traversant, centré sur l'axe longitudinal (10), apte à recevoir un arbre traversant passant par ledit orifice central.

8. Pivot traversant selon l'une des revendications précédentes, **caractérisé en ce que** la première bague (1) comporte au moins un cylindre (1) auquel sont fixées les deuxièmes extrémités des éléments flexibles (7) et **en ce que** la deuxième bague (2) comporte au moins un cylindre (2a, 2b) auquel sont fixées les deuxièmes extrémités des éléments flexibles (8), les cylindres (1, 2a, 2b) ayant le même diamètre extérieur et étant empilés selon l'axe longitudinal (10).

9. Engin spatial comportant au moins un pivot traversant selon l'une des revendications précédentes.

## Patentansprüche

1. Durchgangszapfen, umfassend einen ersten Ring (1) und einen zweiten Ring (2), wobei die beiden Ringe eine Rotationssymmetrie um eine selbe Längsachse (10) aufweisen, wobei einer der beiden Ringe um die Längsachse (10) in Bezug auf den anderen Ring drehbar ist, wobei der Dutchgangszapfen mindestens einen schwebenden, um die Längsachse (10) drehenden Rahmen (3) umfasst, wobei die beiden Ringe (1, 2) mit dem schwebenden Rahmen (3) durch mindestens einen erstes Satz bzw. mindestens einen zweiten Satz mehrerer flexibler Elemente (7, 8) verbunden ist, welche sich in eine Querrichtung in Bezug auf die beiden Ringe (1, 2) erstrecken, wobei die flexiblen Elemente (7) des ersten Satzes ein erstes mit dem schwebenden Rahmen (3) verbundenes Ende und ein zweites dem ersten Ende gegenüberliegendes, mit dem ersten Ring (1) verbundenes Ende besitzen und die flexiblen Elemente (8) des zweiten Satzes ein erstes mit dem schwebenden Rahmen (3) verbundenes Ende und ein zweites, dem ersten Ende gegenüberliegendes, mit dem zweiten Ring (2) verbundenes Ende besitzen, **dadurch gekennzeichnet, dass** in einem Ruhezustand, die mit dem ersten Ring (1) verbundenen flexiblen Elemente (7) um einen selben Neigungswinkel (α) in Bezug auf radiale Richtungen des ersten Ringes (1) geneigt sind und dadurch, dass die mit dem zweiten Ring (2) verbundenen flexiblen Elemente (8) um einen selben Neigungswinkel (α), jedoch in eine Gegenrichtung der Neigungsrichtung der flexiblen Elemente (7) geneigt sind.

2. Durchgangszapfen nach Anspruch 1, **dadurch gekennzeichnet, dass** der schwebende Rahmen (3) außerhalb der beiden Ringe (1, 2) platziert ist.

3. Durchgangszapfen nach Anspruch 1, **dadurch gekennzeichnet, dass** der schwebende Rahmen (3) innerhalb der beiden Ringe (1, 2) platziert ist.

4. Durchgangszapfen nach einem der vorhergehenden Ansprüche, **dadurch gekennzeichnet, dass** der schwebende Rahmen (3) einstückig ist und eine Rotationssymmetrie um die Längsachse (10) aufweist.

5. Durchgangszapfen nach einem der Ansprüche 1 bis 3, **dadurch gekennzeichnet, dass** der schwebende Rahmen (3) aus mehreren Ringabschnitten (3a, 3b, 3c) gebildet ist, an welchen die ersten Enden der flexiblen Elemente (7, 8) befestigt sind.

6. Durchgangszapfen nach einem der vorhergehenden Ansprüche, **dadurch gekennzeichnet, dass** die flexiblen Elemente (7, 8) flexible Platten sind.

7. Durchgangszapfen nach einem der vorhergehenden Ansprüche, **dadurch gekennzeichnet, dass** mindestens einer der zwei Ringe (1, 2) eine Durchgangsöffnung aufweist, welche auf der Längsachse (10) zentriert und in der Lage ist, eine durch die mittlere Öffnung passierende Durchgangswelle aufzunehmen.

8. Durchgangszapfen nach einem der vorhergehenden Ansprüche, **dadurch gekennzeichnet, dass** der erste Ring (1) mindestens einen Zylinder (1) umfasst, an welchem die zweiten Enden der flexiblen Elemente (7) befestigt sind und dadurch, dass der zweite Ring (2) mindestens einen Zylinder (2a, 2b) umfasst, an welchem die zweiten Enden der flexiblen Elemente (8) befestigt sind, wobei die Zylinder (1, 2a, 2b) denselben Außendurchmesser aufweisen und entlang der Längsachse (10) gestapelt sind.

9. Raumfahrzeug, welches mindestens einen Durchgangszapfen nach einem der vorhergehenden Ansprüche umfasst.

## Claims

1. Through-pivot comprising a first ring (1) and a second ring (2), the two rings having a symmetry of revolution about one and the same longitudinal axis (10), one of the two rings being able to rotate about the longitudinal axis (10) with respect to the other ring, said through-pivot comprising at least one floating frame (3) being able to rotate about the longitudinal axis (10), the two rings (1, 2) being connected to the floating frame (3) by at least a first set, respectively at least a second set, of several flexible elements (7, 8) extending in a direction transverse to the two rings (1, 2), the flexible elements (7) of the first set comprising a first end connected to the floating frame (3) and a second end opposite to the first end connected to the first ring (1) and the flexible elements (8) of the second set comprising a first end connected to the floating frame (3) and a second end opposite to the first end connected to the second ring (2), **characterized in that**, in a state of rest, the flexible elements (7) connected to the first ring (1) are inclined by a same angle of inclination (α) with respect to radial directions of the first ring (1) and **in that** the flexible elements (8) connected to the second ring (2) are inclined by a same angle of inclination (α) but in a direction opposite to the inclination direction of the flexible elements (7).

2. Through-pivot according to claim 1, **characterized in that** the floating frame (3) is positioned on the outside of the two rings (1, 2).

3. Through-pivot according to claim 1, **characterized in that** the floating frame (3) is positioned on the inside of the two rings (1, 2).

4. Through-pivot according to one of the preceding claims, **characterized in that** the floating frame (3) is of one piece and has symmetry of revolution about the longitudinal axis (10).

5. Through-pivot according to one of Claims 1 to 3, **characterized in that** the floating frame (3) is made up of several ring portions (3a, 3b, 3c) to which the first ends of the flexible elements (7, 8) are attached.

6. Through-pivot according to one of the preceding claims, **characterized in that** the flexible elements (7, 8) are flexible webs.

7. Through-pivot according to one of the preceding claims, **characterized in that** at least one of the two rings (1, 2) has a through-hole, centred on the longitudinal axis (10), and able to accept a through-shaft passing through the said central hole.

8. Through-pivot according to one of the preceding claims, **characterized in that** the first ring (1) comprises at least one cylinder (1) to which the second ends of the flexible elements (7) are attached, and **in that** the second ring (2) comprises at least one cylinder (2a, 2b) to which the second ends of the flexible elements (8) are attached, the cylinders (1, 2a, 2b) having the same outside diameter and being stacked along the longitudinal axis (10).

9. Spacecraft comprising at least one through-pivot according to one of the preceding claims.
